# EUROPÄISCHE PATENTANMELDUNG

(11) **EP 3 393 014 A1**
(43) Veröffentlichungstag der Anmeldung: **24.10.2018**
(21) Anmeldenummer: 17167358.5
(22) Anmeldetag: 20.04.2017
(51) Int. Cl.: H02K 9/10, H02K 1/32

(54) **ROTORENDRING FÜR EINEN ROTOR EINER ELEKTRISCHEN ROTATIONSMASCHINE**

(71) Anmelder: Siemens Aktiengesellschaft, 80333 München (DE)
(72) Erfinder: Kowalski, Matthias, 45478 Mülheim an der Ruhr (DE); Steins, Hendrik, 45134 Essen (DE)

(57) **Zusammenfassung**

Die Erfindung betrifft einen Rotorendring (10) für einen Rotor (2) einer elektrischen Rotationsmaschine (1), wobei der Rotorendring (10) ein Strömungsleitelement (28) zum Umlenken eines gasförmigen Kühlmediums zum Kühlen von Komponenten (2, 3, 6) der elektrischen Rotationsmaschine (1) aufweist.

## Beschreibung

Die Erfindung betrifft einen Rotorendring für einen Rotor einer elektrischen Rotationsmaschine. Ferner betrifft die Erfindung einen Rotor mit einem derartigen Rotorendring und eine elektrische Rotationsmaschine mit einem derartigen Rotor.

Elektrische Rotationsmaschinen können motorisch als auch generatorisch betrieben werden sowie auch als Phasenschieber genutzt werden. Derartige elektrische Rotationsmaschinen weisen einen Stator und einen Rotor auf.

Als Generatoren genutzte Synchronmaschinen, wie z.B. Turbogeneratoren, erzeugen im Betrieb aufgrund verschiedener physikalischer Effekte Verluste (Wärme), die zu einer Erhöhung der Temperatur von Komponenten der elektrischen Rotationsmaschine führt. Je nach Betriebsweise erwärmen sich unterschiedliche Bereiche bzw. Komponenten der elektrischen Rotationsmaschine unterschiedlich stark. Die Leistung der elektrischen Rotationsmaschine ist durch Grenztemperaturen, die nicht überschritten werden dürfen, limitiert. Hieraus lässt sich ein sog. Leistungsdiagramm ableiten. Dieses zeigt, in welchen Betriebsbereich (Wirk- und Blindleistung) die elektrische Rotationsmaschinen durch welches Bauteil bzw. Komponente (Rotorwicklung, Statorwicklung oder Endzone) limitiert ist.

Als Generatoren genutzte elektrische Rotationsmaschinen werden für einen spezifischen Lastfall - definiert z.B. durch eine vorbestimmte Scheinleistung und einen vorbestimmten Leistungsfaktor - ausgelegt. Eine Erweiterung des Betriebsbereichs, z.B. im stark über- oder untererregten Betrieb, oder bei höherer Wirkleistung, ist ohne einen Neuentwurf oder eine Einschränkung des Leistungsfaktors nicht möglich.

Eine Alternative ist ein Einsatz einer überdimensionierten elektrischen Rotationsmaschine. Eine derartig überdimensionierte elektrische Rotationsmaschine deckt zwar im Leistungsdiagramm einen größeren Bereich ab. Jedoch erfordert eine derartig überdimensionierte elektrische Rotationsmaschine einen höheren Materialaufwand und/oder andere Kühlmechanismen und/oder größere Abmessungen. Somit wird eine derartig überdimensionierte elektrische Rotationsmaschine auch teurer sein.

Es ist Aufgabe der Erfindung, Wege aufzuzeigen, wie der Betriebsbereich einer derartigen elektrischen Rotationsmaschine auf einfache Art und Weise erweitert werden kann, um z.B. einen stark über- oder untererregten Betrieb, oder bei höherer Wirkleistung zu ermöglichen.

Erfindungsgemäß weist der Rotorendring ein Strömungsleitelement zum Umlenken eines gasförmigen Kühlmediums zum Kühlen von Komponenten der elektrischen Rotationsmaschine auf.

So kann das Kühlmedium besonders fokussiert auf diejenige Komponente der elektrischen Rotationsmaschine gelenkt werden, die sich im Betrieb besonders stark erwärmt und daher einer besonders intensiven Kühlung bedarf. Diese verbesserte Kühlung erlaubt dann eine Erweiterung des Betriebsbereichs ohne Neuentwurf und/oder Einschränkungen beim Leistungsfaktor.

Bevorzugt ist eine der Komponenten der Rotor der elektrischen Rotationsmaschine. So kann der Rotor besonders intensiv gekühlt werden, z.B. wenn die elektrische Rotationsmaschine als übererregter Phasenschieber verwendet wird. Bei einem Betrieb als Phasenschieber mit Übererregung bewirkt die hohe Stromstärke des durch die Wicklungen des Rotors fließenden elektrischen Stromes gerade eine besondere Erwärmung des Rotors, so dass dieser bei dieser Betriebsart besonders thermisch belastet wird und daher einer besonderen Kühlung bedarf.

Bevorzugt ist eine der Komponenten ein Stator der elektrischen Rotationsmaschine. So können Wicklungen des Stators und/oder Endbereiche des Stators besonders intensiv gekühlt werden. Hierdurch kann durch Beschneidung des Leitungsdiagramms im Bereich der induktiven Blindleistungsabgabe der Bereich der induktiven Blindleistungsaufnahme und der Wirkleitung verbessert werden.

Bevorzugt ist eine der Komponenten ein Stator-Wickelkopf eines Stators der elektrischen Rotationsmaschine. So kann der Stator-Wickelkopf besonders intensiv gekühlt werden, wenn die elektrische Rotationsmaschine als Phasenschieber verwendet wird. Bei einem Betrieb als Phasenschieber mit Untererregung werden Endbereiche des Stators, in denen sich Stator-Wickelköpfe befinden besonders stark erwärmt, so dass die Endbereiche bei dieser Betriebsart besonders thermisch belastet werden und daher einer besonderen Kühlung bedürfen.

Bevorzugt ist das Strömungsleitelement an dem Rotorendring angeformt. So kann der Rotorendring mit dem Strömungsleitelement einstückig und materialeinheitlich ausgebildet sein. Beispielsweise kann das Strömungsleitelement durch Abtragen von Material von dem Rotorring gebildet sein, z.B. durch Fräsen und/oder Schleifen. Zusätzlich oder alternativ kann auch vorgesehen sein, dass das Strömungsleitelement durch einen Materialauftrag, wie z.B. Auftragsschweißen, auf den Rotorendring gebildet wird.

Bevorzugt weist das Strömungsleitelement eine abschnittsweise ebene Strömungsleitfläche auf. So kann mehr Kühlmedium in den Luftspalt der elektrischen Rotationsmaschine gelenkt werden, was die Kühlung der Wicklungen des Ständers und auch der Endzone verbessert.

Bevorzugt weist das Strömungsleitelement eine abschnittsweise konvex geformte Strömungsleitfläche auf. Dabei wird unter einer abschnittsweise konvex geformten Strömungsleitfläche eine Fläche verstanden, die abschnittsweise nach außen gewölbt ist. So kann das Kühlmedium zu einem hohen Teil unter eine Läuferkappe gefördert werden, die sich in axialer Richtung an den Rotorendring anschließt. Dies verbessert die Kühlung des Rotors und erlaubt so eine höhere induktive Leistungsabgabe bei verminderter induktiver Blindleistungsaufnahme oder Wirkleistungsabgabe.

Bevorzugt weist das Strömungsleitelement eine abschnittsweise konkave Strömungsleitfläche auf. Dabei wird unter einer abschnittsweise konkav geformten Strömungsleitfläche eine Fläche verstanden, die abschnittsweise nach innen gewölbt ist. So kann besonders intensiv ein Heißpunkt in den Wicklungen des Stators im Bereich des Wickelkopfes gekühlt werden.

Ferner gehören zur Erfindung ein Generator mit einem derartigen Rotor und eine Rotorendring für einen derartigen Rotor.

Im Folgenden wird eine bevorzugte Ausführungsform des erfindungsgemäßen Rotors anhand der beigefügten schematischen Zeichnungen näher erläutert. Es zeigt:
- Fig. 1: eine schematische Schnittdarstellung eines Abschnitts eines Ausführungsbeispiels eines Generators.
- Fig. 2: eine Explosionsdarstellung eines Rotors des in Fig. 1 gezeigten Generators.
- Fig. 3: eine perspektivische Darstellung eines ersten Ausführungsbeispiels eines Rotorendrings für den in Fig. 2 gezeigten Rotor.
- Fig. 4: eine perspektivische Darstellung eines zweiten Ausführungsbeispiels eines Rotorendrings für den in Fig. 2 gezeigten Rotor.
- Fig. 5: eine perspektivische Darstellung eines dritten Ausführungsbeispiels eines Rotorendrings für den in Fig. 2 gezeigten Rotor.

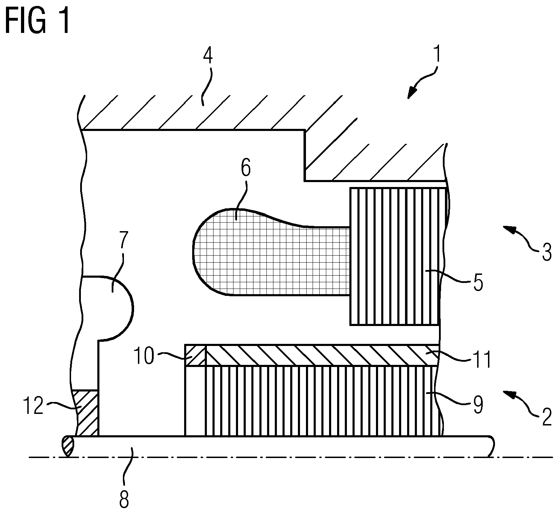

Es wird zunächst auf Fig.1 Bezug genommen.

Dargestellt ist eine elektrische Rotationsmaschine 1, die im vorliegenden Ausführungsbeispiel als Turbogenerator ausgebildet ist.

Dabei wird unter einem Turbogenerator, auch als Vollpolmaschine bezeichnet, eine Bauart eines Synchrongenerators verstanden, der vorwiegend von schnelllaufenden Gas- oder Dampfturbinen angetrieben wird. Eine Kombination des Turbogenerators mit einer Turbine wird als Turbosatz bezeichnet.

Eine derartige elektrische Rotationsmaschine 1 kann auch als Phasenschieber betrieben werden.

Unter einem Phasenschieberbetrieb wird dabei eine Betriebsart der mit einem Netz synchronisierten elektrische Rotationsmaschine 1 verstanden, bei dem fast ausschließlich Blindleistung aus dem Netz bezogen oder in das Netz abgegeben wird. Die elektrische Rotationsmaschine 1 wird dabei im mechanischen Leerlauf betrieben. Die dabei trotzdem aufgenommene, vergleichsweise geringe Wirkleistung dient dazu, die Verluste, wie thermische Verluste in den elektrischen Wicklungen oder Verluste zufolge der mechanischen Reibung in den Lagern, abzudecken.

Durch Erhöhen oder Absenken des Erregerstroms wird die Höhe der ans Netz abgegebenen, oder aus dem Netz aufgenommenen Blindleistung beeinflusst. Bei Übererregung wird induktive Blindleistung abgegeben (Verhalten wie Kondensator) und untererregt nimmt die Synchronmaschine induktive Blindleistung auf (Verhalten wie Spule). Die Abgabe induktiver Blindleistung entspricht einer Aufnahme von kapazitiver Blindleistung und umgekehrt. Die elektrische Rotationsmaschine 1, als Phasenschieber ausgebildet, dient primär der Lastflusssteuerung in vermaschten Stromnetzen und sekundär der Blindleistungskompensation.

In der Regel wird die elektrische Rotationsmaschine 1 im Phasenschieberbetrieb übererregt betrieben, da Energienetze meist mehr durch induktive, als durch kapazitive Verbraucher belastet werden. Energienetze nehmen kapazitiven Charakter durch Leitungskapazitäten an, wenn nur wenige Verbraucher am Netz sind.

Die elektrische Rotationsmaschine 1 weist als rotierenden Teil einen Rotor 2 und als feststehenden Teil einen Stator 3 auf, die innerhalb eines Gehäuses 4 angeordnet sind.

Von dem Rotor 2 sind in der Fig. 1 eine Welle 8 und in axialer Richtung der Welle 8 nebeneinander angeordnet ein Rotorendring 10, eine Rotorkappe 11 und Rotorkörper 9 dargestellt.

Von dem Stator 3 sind in der Fig. 1 ein Stator-Blechpaket 5 und ein Stator-Wickelkopf 6 dargestellt.

Ferner sind in der Fig. 1 in axialer Richtung vor dem Rotor 2 und dem Stator 3 ein Lüfter 12 zum Fördern eines gasförmigen Kühlmediums, wie z.B. Luft oder Wasserstoffgas und ein Diffusor 7 dargestellt, wobei der Lüfter 12 drehfest mit der Welle 8 verbunden ist. Mit anderen Worten: der Lüfter 12 dreht sich mit der gleichen Drehzahl wie der Rotor 2.

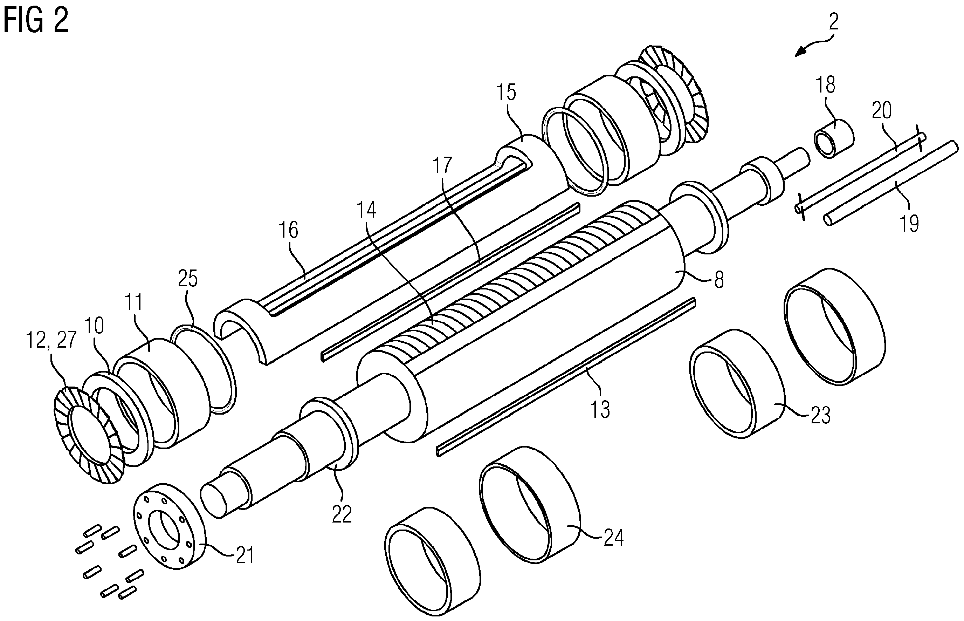

Es wird nun unter zusätzlicher Bezugnahme auf die Fig. 2 der Aufbau des Rotors 2 detailliert erläutert.

Neben der bereits in Fig. 1 gezeigten Welle 8, dem Rotorendring 10 und der Rotorkappe 11 zeigt die Fig. 2 Rotorwicklungen 15 bildende Rotorspulen 16, die in Polschlitze 14 als Nuteinlage 17 zusammen mit Nutverschlußkeilen 13 eingesetzt werden.

Zur Bestromung der Rotorspulen 16 ist einen Erregerstromzuleitung 20 vorgesehen, die eine elektrische Verbindung zu Schleifringen 18 herstellt. Zur elektrischen Isolierung ist ferner eine Isolierung 19 vorgesehen.

Ferner sind eine Kupplung 21, eine Rotorwickelkopfabstützung 23, eine Kappenisolierung 24 und ein Sprengring 25 dargestellt.

Von dem Lüfter 12 sind eine Gebläsenabe 22 und Gebläseschaufeln 27 dargestellt.

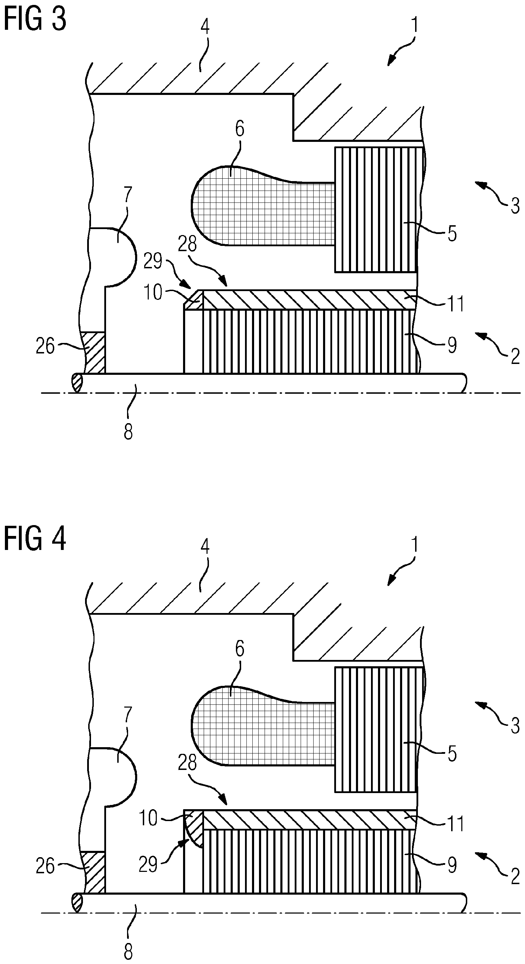

Es wird nun unter zusätzliche Bezugnahme auf Fig. 3 ein erstes Ausführungsbeispiel der Erfindung erläutert.

Der Rotorendring 10 weist ein Strömungsleitelement 28 zum Umlenken eines gasförmigen Kühlmediums, wie z.B. Luft oder Wasserstoffgas, zum Kühlen von einer Komponente der elektrischen Rotationsmaschine 1, hier des Stators 3 bzw. Abschnitten des Stators 3, auf.

Das Strömungsleitelement 28 weist im vorliegenden Ausführungsbeispiel eine abschnittsweise ebene Strömungsleitfläche 29 auf. Die Strömungsleitfläche 29 lenkt auftreffendes Kühlmedium radial auswärts in einen Luftspalt zwischen dem Rotor 2 und dem Stator 3 der elektrischen Rotationsmaschine 1. So wird die Kühlung von Wicklungen des Ständers 3 und auch der Endzone des Rotors 2 verbessert.

Das Strömungsleitelement 28 mit der Strömungsleitfläche 29 ist im vorliegenden Ausführungsbeispiel durch Abtragen von Material von dem Rotorring 29 gebildet worden, z.B. durch Fräsen und/oder Schleifen. Somit ist der Rotorendring 10 mit dem Strömungsleitelement 28 im vorliegenden Ausführungsbeispiel einstückig und materialeinheitlich ausgebildet.

Es wird nun unter zusätzliche Bezugnahme auf Fig. 4 ein zweites Ausführungsbeispiel der Erfindung erläutert.

Das zweite Ausführungsbeispiel unterscheidet sich von dem in Fig. 3 gezeigten ersten Ausführungsbeispiel dadurch, dass die Strömungsleitfläche 29 auftreffendes Kühlmedium radial einwärts umlenkt. Hierzu ist die Strömungsleitfläche 29 abschnittsweise konvex ausgebildet.

So wird das Kühlmedium zu einem hohen Teil unter die Läuferkappe 11 geleitet, die sich in axialer Richtung an den Rotorendring 10 anschließt. So wird die Kühlung des Rotors 2 verbessert, was eine höhere induktive Leistungsabgabe bei verminderter induktiver Blindleistungsaufnahme oder Wirkleistungsabgabe erlaubt.

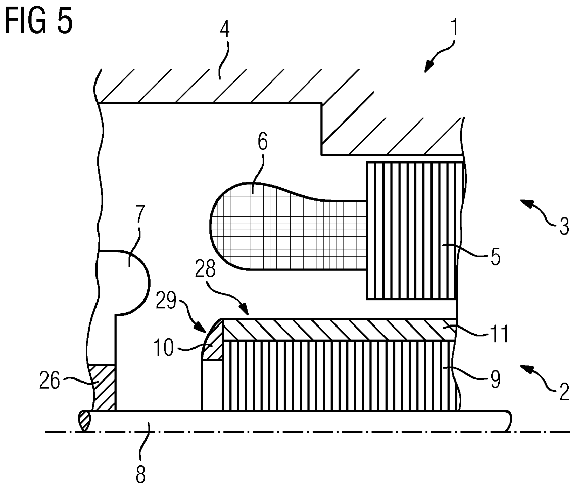

Es wird nun unter zusätzliche Bezugnahme auf Fig. 5 ein drittes Ausführungsbeispiel der Erfindung erläutert.

Das dritte Ausführungsbeispiel unterscheidet sich von dem in Fig. 4 gezeigten zweiten Ausführungsbeispiel dadurch, dass die Strömungsleitfläche 29 auftreffendes Kühlmedium radial auswärts umlenkt. Hierzu ist die Strömungsleitfläche 29 abschnittsweise konkav ausgebildet.

So kann besonders intensiv ein Heißpunkt in der Wicklung des Stators 3 im Bereich des Stator-Wickelkopfes 6 gekühlt werden.

Der Rotorendring 10 kann auswechselbar ausgebildet sein, so dass z.B. der Rotorendring 10 gemäß dem ersten Ausführungsbeispiel durch einen Rotorendring 10 gemäß dem zweiten oder dritten Ausführungsbeispiel ersetzt werden kann um so einen elektrische Rotationsmaschine 1 anpassen zu können.

So kann auf einfache Weise die Kühlung verbessert werden, was eine Erweiterung des Betriebsbereichs ohne Neuentwurf und/oder Einschränkungen beim Leistungsfaktor erlaubt.

## Patentansprüche

1. Rotorendring (10) für einen Rotor (2) einer elektrischen Rotationsmaschine (1),
wobei der Rotorendring (10) ein Strömungsleitelement (28) zum Umlenken eines gasförmigen Kühlmediums zum Kühlen von Komponenten (2, 3, 6) der elektrischen Rotationsmaschine (1) aufweist.

2. Rotorendring (10) nach Anspruch 1,
wobei eine der Komponenten (2, 3, 6) der Rotor (2) der elektrischen Rotationsmaschine (1) ist.

3. Rotorendring (10) nach Anspruch 1 oder 2,
wobei eine der Komponenten (3) ein Stator (3) der elektrischen Rotationsmaschine (1) ist.

4. Rotorendring (10) nach Anspruch 1, 2 oder 3,
wobei eine der Komponenten (2, 3, 6) ein Stator-Wickelkopf (6) eines Stators (3) der elektrischen Rotationsmaschine (1) ist.

5. Rotorendring (10) nach einem der Ansprüche 1 bis 4, wobei das Strömungsleitelement (28) an dem Rotorendring (10) angeformt ist.

6. Rotorendring (10) nach einem der Ansprüche 1 bis 5, wobei das Strömungsleitelement (28) eine abschnittsweise ebene Strömungsleitfläche (29) aufweist.

7. Rotorendring (10) nach einem der Ansprüche 1 bis 5, wobei das Strömungsleitelement (28) eine abschnittsweise konvex geformte Strömungsleitfläche (29) aufweist.

8. Rotorendring (10) nach einem der Ansprüche 1 bis 5, wobei das Strömungsleitelement (28) eine abschnittsweise konkave Strömungsleitfläche (29) aufweist.

9. Rotor (2) mit einem Rotorendring (10) nach einem der Ansprüche 1 bis 8.

10. Elektrische Rotationsmaschine (1) mit einem Rotor (2) nach Anspruch 9.
